# EUROPEAN PATENT APPLICATION

(11) **EP 1 732 007 A1**
(43) Date of publication of application: **13.12.2006**
(21) Application number: 05710295.6
(22) Date of filing: 17.02.2005
(51) Int. Cl.: G06F 15/00

(54) **AUTHENTICATION PROXY METHOD, DISTRIBUTION MANAGEMENT DEVICE, AND AUTHENTICATION PROXY METHOD PROGRAM**

(30) Priority: 24.03.2004 JP 2004086640
(71) Applicant: Vodafone K.K., Minato-ku, Tokyo 1056205 (JP)
(72) Inventor: TANAKA, Satoru, c/o VODAFONE KABUSHIKI KAISHA, Tokyo 1056205 (JP); KAGOSHIMA, Tetsuro, c/o VODAFONE KABUSHIKI KAISHA, Tokyo 1056205 (JP); MIYAYAMA, Shinsuke, c/o VODAFONE KABUSHIKI KAISHA, Tokyo 1056205 (JP); IIDA, Yutaka, c/o VODAFONE KABUSHIKI KAISHA, Tokyo 1056205 (JP); TERAUCHI, Keiji, c/o VODAFONE KABUSHIKI KAISHA, Tokyo 1056205 (JP)
(74) Representative: Jennings, Nigel Robin
(86) International application number: PCT/JP2005/002395
(87) International publication number: WO 2005/091157

(57) **Abstract**

[Problem] To obtain an authentication proxy method, a distribution management device to be proxy for authentication, etc. in which a user does not have to be aware of authentication in distribution of contents needing authentication.

[Means for Resolution] A distribution management device 22 for managing distribution of signals including data of contents to a mobile communication network 10 determines whether a contents providing server 31 on another communication network 30 has made a transmission request for a signal including authentication data in response to a distribution request for a signal including data of contents which request has been sent from a mobile terminal device 11 through the mobile communication network 10. When it is concluded that the transmission request has been made, the distribution management device 22 creates a signal including the authentication data for the mobile terminal device 11 and transmits the created signal to the contents providing server 31.

## Description

### Technical Field

The present invention relates to an authentication proxy method etc. in which signals including data of contents in a streaming format are distributed to mobile terminal devices by use of wireless communication.

### Background Art

For example, distribution of signals including data of contents such as sounds, movies, etc. (hereinafter referred to as "distribution of contents") has been heretofore performed in a network (telecommunication network) such as the Internet or the like. In order to distribute contents, a signal including an instruction to request distribution of required contents is transmitted from a processing device (for example, a computer) through a network to a computer called a contents providing server for storing data of contents (hereinafter, this signal will be referred to as "distribution request", and transmitting the distribution request will be referred to as "making a distribution request"). For example, as for the instruction, an instruction of a distribution request is performed specifically by designating a URL (Uniform Resource Locator) describing a site on the network where data of contents are stored and a method (protocol etc.) for distributing the contents. The contents providing server distributes contents based on the distribution request. Here,there are various methods for distributing contents.

One of the methods is a method for distributing contents in a streaming format. In the distribution in a streaming format, the contents providing server (sequentially) distributes (or transmits) signals including data of contents to a request-source processing device, for example, in a packet format in accordance with a distribution request. For example, the request-source processing device temporarily stores the data included in the received signals, and sequentially processes (or decodes) the data so as to perform playback of contents (which will be referred to as "streaming playback") (for example, see Patent Document 1).

Patent Document 1: Japanese Patent Laid-Open No. 2003-85084 (page 4, Fig. 1)

### Disclosure of the Invention

### Problems that the Invention is to Solve

Here, for example, assume that contents are to be distributed to mobile terminal devices such as portable telephones or the like through a mobile communication network. In distribution of contents, the contents may be distributed only to users set in advance. In order to confirm whether a user is a member of the set users or not, user authentication is usually performed. For example, in RTSP (Real-Time Streaming Protocol) described in RFC 2326, there are rules of authentication about input of a user ID and a password for user authentication. On the other hand, no special rule about signals for authentication is set forth in programs such as 3GPP (3rd Generation Partnership Project) or the like currently used in data signal distribution of contents or the like to mobile terminal devices.

In distribution of contents in a streaming format, it is usually difficult for a provider to make a contents providing server execute a unique authentication process. Therefore, an authentication process provided as a package is carried out.

As described above, even when, for example, the contents providing server makes a request for authentication, 3GPP, however, has no rules to make a request to a mobile terminal device for authentication and no rules to transmit a signal including data of response to the request. In addition, even if input for authentication can be performed, it will be burdensome for a user to input data of a user ID and a password whenever there is a request for authentication. The same thing can occur not only in distribution of contents in a streaming format but also in access to data in another format.

It is therefore an object of the present invention to obtain an authentication proxy method etc. in which a user does not have to be aware of authentication. It is another object of the present invention to obtain a method etc. suitable for distribution of contents particularly in a mobile communication network that has no standardized authentication.

### Means for Solving the Problems

In an authentication proxy method according to the present invention, when it is concluded that a transmission request for a signal including authentication data has been made from a contents providing server to a terminal device, a signal including the authentication data for the terminal device is created and transmitted to the contents providing server.

In addition, in an authentication proxy method according to the present invention, when a distribution management device for managing distribution of signals including data of contents to one communication network concludes that a transmission request for a signal including authentication data has been made from a contents providing server on another communication network in response to a distribution request for a signal including data of contents made from a terminal device through the one communication network, the distribution management device creates a signal including the authentication data for the terminal device and transmits the created signal to the contents providing server.

In addition, in the authentication proxy method according to the present invention, authentication data stored in a storage means in advance are searched to acquire authentication data corresponding to the terminal device, the contents or the contents providing server, and a signal including the acquired authentication data is created.

In addition, a distribution management device according to the present invention is provided between one communication network and another communication network, and when a transmission request for a signal including authentication data for a terminal device on the one communication network has been made from a contents providing server on the other communication network, the distribution management device creates a signal including the authentication data for the terminal device and transmits the created signal to the contents providing server.

In addition, a distribution management device according to the present invention is provided between one communication network and another communication network, and the distribution management device includes: a storage means for storing authentication data about one or plural terminal devices; a data processing means for searching the storage means so as to acquire authentication data corresponding to one of the terminal devices, and creating a signal including the acquired authentication data, when the terminal device makes a distribution request for a signal including data of contents and a contents providing server makes a transmission request for a signal including the authentication data for the terminal device in response to the distribution request; and a communication means for transmitting the signal including the authentication data to the contents providing server.

In addition, in the distribution management device according to the present invention, the storage means stores one or plural pieces of the authentication data for each of the terminal devices correspondingly to the contents or the contents providing server, and the data processing means searches authentication data corresponding to the terminal device, the contents or the contents providing server.

In addition, in the distribution management device according to the present invention, the data of the contents are data in a streaming format, and the signal including the authentication data is a signal created according to RTSP.

In addition, in the distribution management device according to the present invention, the one communication network is a mobile communication network for wireless communication with mobile terminal devices.

In addition, an authentication proxy method program according to the present invention makes a computer execute the steps of: determining whether a signal indicating a request for authentication data for a terminal device has been transmitted from a contents providing server or not in response to a distribution request from the terminal device for a signal including data of contents; and creating a signal including the authentication data for the terminal device and transmitting the created signal to the contents providing server through a communication means when it is concluded that the signal indicating the request for the authentication data has been transmitted.

In addition,the authentication proxy method program according to the present invention makes the computer execute the steps of: searching authentication data stored in a storage means in advance, so as to acquire authentication data corresponding to the terminal device, the contents or the contents providing server; and creating a signal including the acquired authentication data.

### Effect of the Invention

In such a manner, according to the present invention, when it is concluded that a transmission request for a signal including authentication data has been made from a contents providing server to a terminal device, a signal including authentication data for the terminal device is created. Accordingly, a user of the terminal device does not have to input items for authentication such as a user ID, a password, etc. Thus, the input load can be reduced. Even when the terminal device is a mobile terminal device under a mobile communication network environment having no rules about signals including authentication data, a device represented by the distribution management device serves as proxy for authentication. Accordingly, a signal including data of contents needing authentication can be distributed even from a contents providing server which is, for example, located on another communication network. This is effective particularly in distribution of contents using data in a streaming format in which it is difficult to realize a unique authentication mechanism in the contents providing server.

The distribution management device searches authentication data stored in the storage means in advance so as to acquire authentication data corresponding to the terminal device, creates a signal including the authentication data as proxy for the terminal device, and transmits the created signal to the contents providing server. Thus, a signal including authentication data can be created easily from the authentication data stored in advance by registration or the like. In that event, the number of pieces of authentication data for each terminal device is not limited to one. When authentication data differing in accordance with contents or contents providing servers are stored in advance so that the authentication data can be searched, the distribution management device can deal with various user IDs.

### Best Mode for Carrying Out the Invention

### Embodiment 1

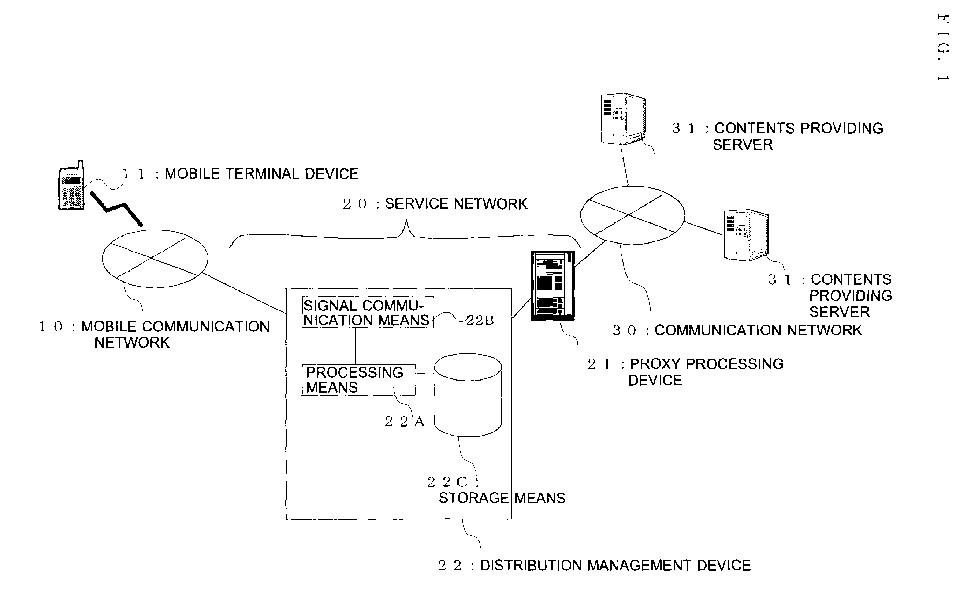

Fig. 1 is a diagram showing a system configuration according to a first embodiment of the present invention. In Fig. 1, a mobile communication network 10 is, for example, a telecommunication network constituted by a wireless base station, a wireless communication control apparatus, an exchange (not shown), etc. Signals are exchanged by wireless communication at least between a mobile terminal device 11 serving as a final data signal distribution destination and the wireless base station (data signal distribution of contents is performed in this embodiment).

One or plural contents providing servers 31 are present on a communication network 30. Each contents providing server 31 stores one or plural pieces of contents data in a streaming format. Each contents providing server 31 distributes the stored contents in accordance with a distribution request.

The service network 20 is a network constituted by at least a proxy device 21 and a distribution management device 22. The service network 20 is a telecommunication network serving as a bridge builder (relay) between the mobile communication network 10 and the communication network 30 for data signal distribution. The proxy processing device 21 is a server (processing device) which is, for example, constituted by a computer or the like, serving as a node between the service network 20 and the communication network 30, and serving to be proxy for data signal distribution from the contents providing server 31 based on distribution requests transmitted from the mobile communication network 10 side. First, based on a distribution request from the mobile communication network 10 side, a distribution request is sent to a contents providing server 31 storing the contents data. When contents in a streaming format are distributed from the contents providing server 31, for example, the data of the contents are temporarily stored once, and data signals are then distributed to the mobile communication network 10 side. This is, for example, intended to buffer a possible delay of data signal distribution caused by the traffic condition of the communication network 30. In some case, data of one or plural pieces of contents may be saved (stored) in the proxy processing device 2 1. In such a case, the proxy processing device 21 serves as a contents providing server 31 performing data signal distribution in response to a distribution request for the contents.

The distribution management device 22 is provided between the mobile communication network 10 and the proxy processing device 21. The distribution management device 22 is constituted by at least a processing means 22A, a signal communication means 22B and a storing means 22C. The distribution management device 22 relays distribution requests, and carries out processing upon distribution requests from the mobile communication network 10 side. For example, the distribution management device 22 controls the number of distribution requests so as to prevent the communication load on the mobile communication network 10 from increasing. In this embodiment, when the distribution management device 22 concludes that a request for authentication has been sent from the contents providing server 31 side in response to a distribution request from a mobile terminal device 11, the distribution management device 22 carries out processing to automatically generate a signal including data for authentication about the mobile terminal device 11, and transmit the generated signal to the contents providing servers 31 through the proxy processing device 21. Here, in this embodiment, assume that a signal based on RTSP is used as the control signal to be used for realizing distribution of contents in a streaming format. In addition, assume that Basic Authentication is used as an authentication method, and data for authentication are data of a user ID and a password by way of example.

The processing means 22A is a means generally constituted by a computer or the like called a server, and for carrying out processing about distribution of contents. Particularly in this embodiment, the processing means 22A searches authentication data of the respective mobile terminal devices 11 stored in the storage means 22C so as to acquire authentication data of a mobile terminal device 11 requested for authentication. Then, the processing means 22A inserts the acquired authentication data into a place where authentication information should be inserted in conformity with RTSP. Thus, the processing means 22A generates data to be transmitted as a signal together with other data. In addition, the processing means 22A controls each means constituting the distribution management device 22.

The signal communication means 22B relays signals to be transmitted to the service network 20, such as distribution requests from the mobile communication network 10, signals based on data signal distribution from the communication network 30, etc. As for signals to be processed by the processing means 22A, the signal communication means 22B transmits the signals to the processing means 22A. In this embodiment, as for signals transmitted as authentication requests from the contents providing server 31 through the communication network 30, the proxy device 21 and the service network 20, the signal communication means 22B transmits the signals to the processing means 22A for carrying out a data generation process thereon. In addition, signals generated by the processing means 22A and including authentication data in conformity with RTSP are transmitted to the contents providing server 31 through the service network 20. Though not shown below especially, all the signals between the processing means 22A and the service network 20 are exchanged through the signal communication means 22B.

The storage means 22C stores authentication data about the respective mobile terminal devices 11. It is therefore unnecessary to make a request to each mobile terminal device 11 for a signal including authentication data. The number of pieces of authentication data is not always one for each mobile terminal device 11. For example, authentication data may differ from one distribution-requested contents to another, or may differ from one provider (contents providing server 31) providing contents to another. In this embodiment, assume that the same authentication data of one mobile terminal device 11 are used for all of contents. As for a user ID and a password of each user, for example, the user ID is decided when the user joins communication service, and a fixed password(information)managed by the distribution management device 22 is used as the password. Here, the storage means 22C does not have to be connected directly to the processing means 22A. The storage means 22C may be connected thereto in an environment where signals including authentication data can be exchanged, for example, through another communication network or the like. Alternatively, the signal communication means 22B and the storage means 22C may be built in the processing means 22A.

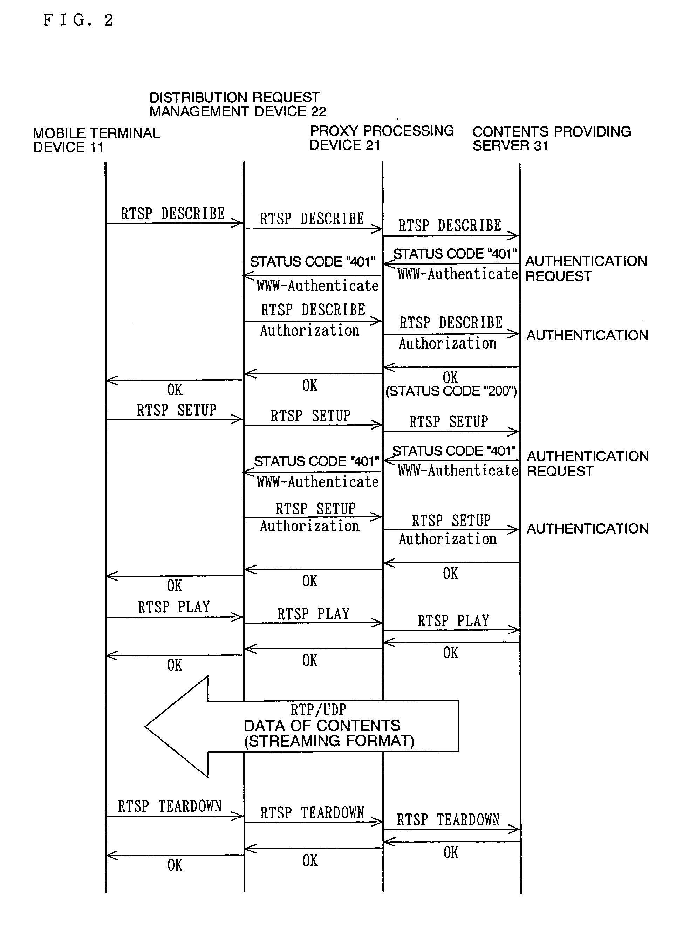

Fig. 2 is a diagram showing the flow of signals in the case when an authentication request is made in a distribution request. Signals "DESCRIBE", "SETUP" and "PLAY" for negotiation including control data as a distribution request and signals including data of status codes (status code "200" indicating "OK" in Fig. 5) of responses to those signals are transmitted and received in RTSP. Here, consider the case where a distribution request has been sent from a mobile terminal device 11 through the mobile communication network 10. When signals "DESCRIBE" and "SETUP" are transmitted from a mobile terminal device 11, the processing means 22A of the distribution management device 22 determines whether a distribution request can be made or not, based on the current condition of contents distribution. When the processing means 22A concludes that a distribution request can be made, the processing means 22A transmits signals "DESCRIBE" and "SETUP" to the contents providing server 31.

Here, when the contents providing server 31 concludes that authentication is necessary for the distribution-requested contents, the contents providing server 31 transmits a signal (signal with a WWW-Authenticate header including a status code "401") indicating an authentication request in conformity with RTSP to the mobile terminal device 11. In Fig. 2, the contents providing server 31 transmits the signal indicating an authentication request when both the signals "DESCRIBE" and "SETUP" are transmitted. However, the present invention is not limited to this. The timing to transmit the signal indicating an authentication request may differ in accordance with the specification of the contents providing server 31 to that of another (it will go well if the distribution management device 22 makes a response to a signal transmitted thereto in any case, as will be described later). For example, the signal indicating an authentication request may be transmitted only when either the signal "DESCRIBE" or the signal "SETUP" is transmitted.

When the signal indicating an authentication request is transmitted, the processing means 22A of the distribution management device 22 searches the authentication data stored in the storage means 22C so as to acquire authentication data about the mobile terminal device 11 in question. Here, the processing means 22A identifies the mobile terminal device 11 in question based on data of a unique number, a phone number, etc. given to each mobile terminal device 11. Then, the processing means 22A transmits a signal conformal to RTSP (a signal having an Authorization header with authentication data) including the acquired authentication data to the contents providing server 31. In that event, the authentication data may be encoded or encrypted. When the contents providing server 31 concludes that the authentication data are true, the contents providing server 31 transmits a signal including data of a status code of response (status code "200" indicating "OK" in Fig. 5).

After that, a signal "PLAY" and a signal including data of a status code of response to that signal are transmitted and received between the mobile terminal device 11 in question and the contents providing server 31 through the distribution management device 22. Then, real data signal distribution is performed in a streaming format. A protocol called RTP (Real Time Transport Protocol) for use in distribution of sounds, movies, etc. is used here. To terminate the data signal distribution, a signal "TEARDOWN" and a response signal to that signal are transmitted and received. Thus, the distribution of contents to the mobile terminal device 11 is terminated.

As described above, according to the first embodiment, when a distribution request for contents needing authentication is sent from a mobile terminal device 11 and a signal indicating an authentication request is transmitted from the contents providing server 31, the processing means 22A of the distribution management device 22 searches the storage means 22C so as to acquire authentication data about the mobile terminal device 11 in question stored in the storage means 22C. The processing means 22A transmits a signal including the authentication data to the contents providing server 31 so as to be proxy for authentication. Accordingly, contents needing authentication can be distributed to mobile terminal devices over a communication network having no rules about signals for authentication, such as 3GPP. In addition, the mobile communication terminal 11 side does not have to make input for authentication, such as input of a user ID and a password, or the like. Thus, the input load can be reduced.

### Embodiment 2

In the aforementioned embodiment, authentication data based on a user ID and a password decided at the time of joining or the like are searched over the storage means 22C, and a signal including the data is transmitted to the contents providing server 31. The present invention is not limited to this embodiment. For example, when a first authentication request is sent, the processing means 22A may create a user ID and a password automatically and store them in the storage means 22C.

### Embodiment 3

Although description is made particularly about distribution of contents in the aforementioned embodiment, the present invention is not limited to this embodiment. The invention is also applicable to authentication at the time when another kind of data is distributed. As for the protocol of signals to be used, therefore, the invention is not limited to signals conformal to RTSP as described in the aforementioned embodiment.

Although Basic authentication is used as authentication data in the aforementioned embodiment, for example, the invention is also applicable to authentication using Digest authentication.

### Embodiment 4

In the aforementioned embodiment, the service network 20 is constituted by the proxy processing device 21 and the distribution request management device 22. The proxy processing device 21 is typically provided in terms of reliability of data signal distribution, security countermeasures, etc. However, the present invention is not especially limited to this. The distribution request management device 22 may send a distribution request directly to the contents providing server 31. In the aforementioned embodiment, the distribution request management device 22 is established independently so that labor is divided between the distribution request management device 22 and the proxy processing device. However, the proxy processing device 21 and the distribution request management device 22 may be formed out of one and the same device.

### Embodiment 5

In the aforementioned embodiment, description has been made on the assumption that one of communication networks between which the service network 20 serves as a bridge builder is the mobile communication network 10 under the 3GPP environment to perform data signal distribution to a mobile terminal device 11. The present invention is not limited to the data signal distribution to the mobile terminal device 11. For example, the invention is also applicable to the case where data signal distribution to a processing device (terminal device) such as a usual computer or the like is carried out.

### Brief Description of the Drawings

[Fig. 1] A diagram showing a system configuration according to a first embodiment of the present invention.
[Fig. 2] A diagram showing the flow of signals at the time when an authentication request is made in a distribution request.

### Description of Reference Numerals

- 10: mobile communication network
- 11: mobile terminal device
- 20: service network
- 21: proxy processing device
- 22: distribution management device
- 22A: processing means
- 22B: signal communication means
- 22C: storage means
- 30: communication network
- 31: contents providing server

## Claims

1. An authentication proxy method **characterized by** including the steps of:
determining whether a transmission request for a signal including authentication data has been made from a contents providing server to a terminal device or not; and
creating a signal including the authentication data for the terminal device and transmitting the created signal to the contents providing server when it is concluded that the transmission request has been made.

2. An authentication proxy method **characterized in that** a distribution management device for managing distribution of signals including data of contents to one communication network performs:
determining whether a transmission request for a signal including authentication data has been made from a contents providing server on another communication network in response to a distribution request for a signal including data of contents from a terminal device through the one communication network or not; and
creating a signal including the authentication data for the terminal device and transmitting the created signal to the contents providing server when it is concluded that the transmission request has been made.

3. An authentication proxy method according to Claim 2, **characterized by** including the steps of:
searching authentication data stored in a storage means in advance, so as to acquire authentication data corresponding to the terminal device, the contents or the contents providing server; and
creating a signal including the acquired authentication data.

4. A distribution management device **characterized in that**:
the distribution management device is provided between one communication network and another communication network; and
when a transmission request for a signal including authentication data for a terminal device on the one communication network has been made from a contents providing server on the other communication network, the distribution management device creates a signal including the authentication data for the terminal device and transmits the created signal to the contents providing server.

5. A distribution management device **characterized in that**:
the distribution management device is provided between one communication network and another communication network; and
the distribution management device comprises:
a storage means for storing authentication data about one or plural terminal devices;
a data processing means for searching the storage means so as to acquire authentication data corresponding to one of the terminal devices, and creating a signal including the acquired authentication data, when the terminal device makes a distribution request for a signal including data of contents and a contents server makes a transmission request for a signal including the authentication data for the terminal device in response to the distribution request; and
a communication means for transmitting the signal including the authentication data to the contents providing server.

6. A distribution management device according to Claim 5, **characterized in that**:
the storage means stores one or plural pieces of the authentication data for each of the terminal devices correspondingly to the contents or the contents providing server; and
the data processing means searches authentication data corresponding to the terminal device, the contents or the contents providing server.

7. A distribution management device according to any one of Claims 4 through 6, **characterized in that** the data of the contents are data in a streaming format, and the signal including the authentication data is a signal created according to RTSP.

8. A distribution management device according to any one of Claims 4 through 7, **characterized in that** the one communication network is a mobile communication network for wireless communication with mobile terminal devices.

9. An authentication proxy method program **characterized by** making a computer execute the steps of:
determining whether a signal indicating a request for authentication data for a terminal device has been transmitted from a contents providing server or not in response to a distribution request from the terminal device for a signal including data of contents; and
creating a signal including the authentication data for the terminal device and transmitting the created signal to the contents providing server through a communication means when it is concluded that the signal indicating the request for the authentication data has been transmitted.

10. An authentication proxy method program according to Claim 9, **characterized by** making the computer execute the steps of:
searching authentication data stored in a storage means in advance, so as to acquire authentication data corresponding to the terminal device, the contents or the contents providing server; and
creating a signal including the acquired authentication data.
